# EUROPEAN PATENT SPECIFICATION

(11) **EP 3 366 175 B1**
(45) Date of publication and mention of the grant of the patent: **13.11.2024**
(21) Application number: 17157385.0
(22) Date of filing: 22.02.2017
(51) Int. Cl.: A47J 43/04, A47J 43/07

(54) **METHOD, SYSTEM AND COMPUTER PROGRAMS FOR HANDLING REMOTE CONTROL OF A COOKING APPLIANCE TO PROVIDE A CUSTOMIZED DIET**
VERFAHREN, SYSTEM UND COMPUTERPROGRAMME ZUR HANDHABUNG VON FERNSTEUERUNG EINES KOCHGERÄTES ZUR BEREITSTELLUNG EINER INDIVIDUELL ANGEPASSTEN DIÄT
PROCÉDÉ, SYSTÈME ET PROGRAMMES D'ORDINATEUR POUR GÉRER LA COMMANDE À DISTANCE D'UN APPAREIL DE CUISSON POUR FOURNIR UN RÉGIME PERSONNALISÉ

(43) Date of publication of application: 29.08.2018
(73) Proprietor: Taurus Research and Development S.L.U., 25790 Oliana (ES)
(72) Inventor: TRENCH ROCA, Lluís, 08650 SALLENT (ES)
(74) Representative: Juncosa Miró, Jaime

(56) References cited:
- EP-A1- 2 805 653
- EP-A1- 2 805 654
- EP-A1- 2 822 226
- EP-A2- 2 562 967
- EP-A2- 2 874 031
- WO-A1-2016/016337
- US-A1- 2008 178 749

## Description

### Technical Field

The present invention relates, in general, to the field of the cooking appliances. In particular, present invention relates to a method, and to a system and computers programs products, for handling remote control of a cooking appliance to provide a customized diet via a cloud-computing infrastructure.

### Background of the invention

From patent documents EP-A1-2822226, US-A1-2013003490, EP-B1-1561409, EP-A-2874031 and US-A1-2008178749, among other documents related with cooking appliance, systems and methods are known for processing and preparing foods by means of receiving control instructions comprising preparations parameters for a recipe from remote computing devices via an intermediate server such as a cloud computer server.

Besides, from document WO-A2-2016102235 it is known a food processor, in particular a mixing device, which can cooperate with a weighting device, in which information on body-specific parameters of a user will be forwarded directly to the food processor.

EP-A2-2562967 relates to information management systems for a home appliance, and more particularly, to an information management system for embodying communication between a home appliance and a wireless terminal and between the home appliance and an external service business operator server possible for providing information a user requires quickly and remote management of the home appliance.

None of the current documents found in the state of the art, however, teach or suggest, a method, and a system, planned to for each of a plurality of users, handling remote control of a cooking appliance of each user to provide a customized diet, in which said customized diet is created/prepared by a cloud computer server based on physiological parameters acquired of the users by one or more measuring devices.

### Description of the invention

The present invention relates to a method according to independent claim 1 and to a system according to independent claim 7. To that end, embodiments of the present invention provide according to a first aspect a method for handling remote control of a cooking appliance to provide a customized diet. The method comprises storing by a cloud computer server one or more recipes including some food preparation parameters for one or more cooking appliances having a communication unit providing interconnection with the cloud computer server via a communications network.

Unlike the know proposals in the field, in the proposed method, the cloud computer server further comprises: receiving, via said communications network, one or more parameters of a plurality of users acquired by at least one measuring device such as a fitness sensor wearable device, a weighting device/scale, a glucose sensor, a pressure sensor, a thermometer, etc.; creating, a customized diet plan for each of said plurality of users based on the received one or more parameters and the stored recipes; receiving, identification data (such as a serial number or an identification number) of a particular cooking appliance of a given user of said plurality of users via said communication network; and transmitting, control instructions comprising a recipe, as a part of the diet plan, to an information interface integrated in said particular cooking appliance of said given user or in a communications terminal of said given user.

According to the proposed method, the one or more parameters may include: glucose level, blood pressure, weight, body mass index, temperature, burnt calories, heartbeat, among others.

According to an embodiment, the identification data of said particular cooking appliance is sent by the user communications terminal during a login operation of the user in the cooking appliance. Preferably, the login operation is executed by a software application installed in the user communications terminal.

Alternatively, according to another embodiment, the identification data of said particular cooking appliance is sent by the communication unit of the cooking appliance upon the user having performed a login operation in the cooking appliance.

According to the invention, the cloud computer server also compares the one or more parameters it has received with a threshold (or thresholds) and further adapts the customized diet plan depending on the result of said comparison.

According to another embodiment, the cloud computer server when the one or more parameters are above the threshold (or thresholds) also includes a warning for the user to indicate a non-healthy state of the latter. Preferably, this is done at the same time of the transmission of the control instructions; however it can also be done later.

Other embodiments of the invention that are disclosed herein include a system configured to perform the method embodiment steps and operations summarized above and disclosed in detail below.

### Brief description of the drawings

The above and other advantages and characteristics will be more fully understood from the following detailed description of embodiments with reference to the attached drawings, which must be taken by way of illustration, not limitation, wherein:
Fig. 1 schematically shows one embodiment of a system for handling remote control of a cooking appliance to provide a customized diet, according to an embodiment of the present invention.
Fig. 2 is a flow chart diagram illustrating an embodiment of the proposed method for handling remote control of a cooking appliance to provide a customized diet.

### Detailed description of some embodiments

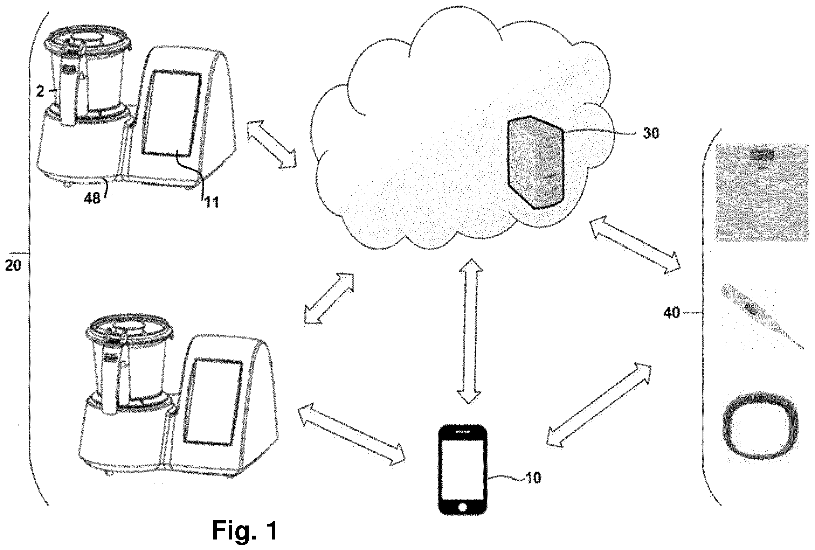

Fig. 1 illustrates an embodiment of a system for handling remote control of a cooking appliance to provide a customized diet. According to this embodiment, the system, as may be seen in the figure, comprises different cooking appliances 20 for processing and preparing foods by cooking, a cloud computer server 30, several measuring devices 40 and a user communications terminal 10 (only one has been illustrated for simplicity of the figure, however the system may comprise more than one. Preferably the system comprises one user communications terminal 10 such as a smartphone, a PDA, a tablet computer or a personal computer, among others, associated to each cooking appliance 20). The different arrows shown in the figure illustrate the different communication links each element can establish with the other elements of the system, preferably, via wireless communication through a communications network, such as a wide area network; however other types of networks are also possible, such as a medium area network, or combinations of different types or network.

The cloud computer server 30 (i.e. a computer server located in a cloud computing infrastructure, or part thereof, or even a plurality of computing entities cooperating with one another), is configured to store recipes including food preparation parameters for said different cooking appliances 20 of a plurality of users. The recipes preferably have associated its nutritional content. It should be noted that although in Fig. 1 only two cooking appliances 20 have been illustrated, the cloud computer server 30 can store recipes for a greater number of cooking appliances 20.

Preferably, the cloud computer server 30 receives said recipes for each different cooking appliance 20 from a specific software application ('App'), which can be installed in a user communications terminal 10 or alternatively in a dedicated computing device included in the cooking appliance 20 as taught in EP 2805653 patent application of the same inventors of present patent application.

According to the proposed invention, the measuring devices 40 may comprise: a fitness sensor wearable device, a weighting device, a glucose sensor, a pressure sensor, a thermometer, among other devices capable of measuring a physiological parameter of a user. According to the particular embodiment illustrated in Fig. 1, the measuring devices 40 include a weighting device, a thermometer and a fitness wearable device. In alternative embodiments, in this case not illustrated, the different types of measuring devices 40 may be all of a same type, e.g. only fitness sensor wearable devices or glucose sensors. Even, only one measuring device 40 can be used by present invention.

A measuring device 40 forwards the acquired parameter(s) directly to the cloud computer server 30, for example via WiFi or 2G/3G/4G technology, or via a user communications terminal 10. In this latter case, preferably, the connection between the measuring device 40 with the user communications terminal 10 is performed via Bluetooth or infrared technology whereas the connection of the user communications terminal 10 with the cloud computer server 30 is performed, preferably, via a WiFi or 2G/3G/4G technology.

Each cooking appliance 20 comprises a communication unit configured to provide interconnection with the cloud computer server 30. Said communication unit may also be configured to provide interconnection with its associated user communications terminal 10. Alternatively, each cooking appliance 20 may comprise two independent communication units to independently provide the interconnection to the cloud computer server 30 and to its associated user communications terminal 10.

In addition, the cooking appliances 20 preferably also comprise a base structure 48 on which a support for holding a container 2 containing foods to be processed is assembled, a driving unit to operate a stirring device or a cutting device contained inside said container 2, a heating unit to heat the container 2 and a control device for controlling said driving and heating units. The control device and the communication unit(s) are operatively connected in order the control device control the driving and heating units based on control instructions received from the cloud computer server 30. The cooking appliances 20 preferably also include a display unit 11, not limitative as in alternatives embodiments, not illustrated, the cooking appliance 20 can be devoid of a display unit as taught in EP 2805654 patent application of the same inventors of present patent application.

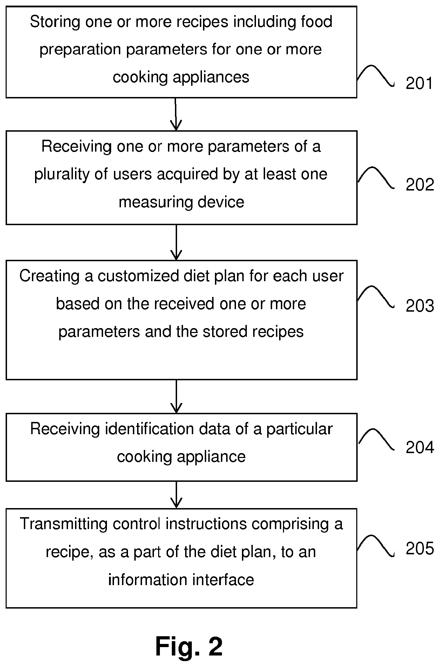

With reference to Fig. 2, therein it is illustrated a first embodiment of the proposed method. The method starts, at step 201, by the cloud computer server 30 storing in a memory thereof one or more recipes including food preparation parameters for one or more cooking appliances 20. Then, at step 202, the cloud computer server 30 receives, via the communications network, one or more parameters of a plurality of users acquired by at least one measuring device 40, for instance the glucose level, the blood pressure, the weight, the body mass index, the temperature, or the heartbeat. Once the cloud computer server 30 has received the one or more parameters the cloud computer server 30 creates, step 203, a customized diet plan for each of the users using the stored recipes. The cloud computer server 30 preferably also stores the customized diet plan it has created. Then, at step 204, the cloud computer server 30 receives identification data (such as a serial number or an identification number) of a particular cooking appliance 20 of a given user of the plurality of users via the communication network (Besides, or alternatively, it can receive identification information of the given user such as a nickname or a username). Finally, at step 205, the cloud computer server 30 transmits control instructions comprising a recipe, as a part of the diet plan, to an information interface (for example a display unit) integrated in said particular cooking appliance 20 of said given user or in a communications terminal 10 of said given user.

According to the invention, the cloud computer server 30 also compares the parameter(s) it has received with a given threshold. For instance, if the parameter received is the blood pressure the cloud computer server 30 compares it with a normal resting blood pressure threshold, which for an adult is approximately 120 mmHg systolic, and 80 mmHg diastolic, abbreviated "120/80 mmHg". Another example could be the burnt calories. If the parameter received is the burnt calories of a user(s) the cloud computer server 30 compares it with daily calorie requirement of the user(s), which generally is about 1200 calories per day for women and 1800 calories per day for men. Consequently, the cloud computer server 30 can adapt the customized diet plan depending on the result of said comparison. Moreover, in case the value of the received parameter(s) is above the threshold, the cloud computer server 30 may also provide a warning for the user to indicate a non-healthy state of the latter as part of the transmission of the control instructions.

The proposed invention may be implemented in hardware, software, firmware, or any combination thereof. If implemented in software, the functions may be stored on or encoded as one or more instructions or code on a computer-readable medium.

As used herein, computer program products comprising computer-readable media including all forms of computer-readable medium except, to the extent that such media is deemed to be non-statutory, transitory propagating signals.

The scope of the present invention is defined in the following attached claims.

## Claims

1. A method for handling remote control of a cooking appliance to provide a customized diet, the method comprising:
storing, by a cloud computer server (30), one or more recipes including at least some food preparation parameters for one or more cooking appliances (20), wherein said one or more cooking appliances (20) comprise a communication unit providing interconnection via a communications network;
receiving, by the cloud computer server (30), via said communications network, one or more parameters of a plurality of users acquired by at least one measuring device (40), said one or more parameters including at least one of a glucose level, a blood pressure level, a weight, a body mass index, a temperature, and/or a heartbeat;
creating, by the cloud computer server (30), a customized diet plan for each of said plurality of users based on the received one or more parameters and the stored recipes;
comparing, by the cloud computer server (30), the received one or more parameters with at least one given threshold and adapting the customized diet plan depending on the result of said comparison;
receiving, by the cloud computer server (30), identification data of a particular cooking appliance (20) of a given user of said plurality of users via said communications network; and
transmitting, by the cloud computer server (30), control instructions comprising a recipe, as a part of the customized diet plan, to an information interface integrated in said particular cooking appliance (20) of said given user or integrated in a communications terminal (10) of said given user.

2. The method of claim 1, wherein said identification data of a particular cooking appliance (20) is sent by said user communications terminal (10) during a login operation of the user in the cooking appliance (20).

3. The method of claim 2, wherein said login operation is executed by a software application installed in the user communications terminal (10).

4. The method of claim 1, wherein said identification data of a particular cooking appliance (20) is sent by said communication unit of the cooking appliance (20) upon the user performing a login operation in the cooking appliance (20).

5. The method of claim 1, wherein said transmitting of the control instructions further includes a warning for the user to indicate a non-healthy state of the user when the one or more parameters being above the given threshold.

6. The method of claim 1, wherein said at least one measuring device comprises a wearable device including a fitness sensor.

7. A system for handling remote control of a cooking appliance to provide a customized diet, the system comprising:
a plurality of cooking appliances (20), each one comprising a communication unit configured to provide interconnection thereof via a communications network;
a plurality of measuring devices (40) configured to acquire one or more parameters of a plurality of users, said one or more parameters including at least one of a glucose level, a blood pressure level, a weight, a body mass index, a temperature, and/or a heartbeat; and
a cloud computer server (30);
wherein the cloud computer server (30) is configured to:
store one or more recipes including at least some food preparation parameters for said plurality of cooking appliances (20),
receive, via the communications network, the acquired one or more parameters of the plurality of users,
create a customized diet plan for each of said plurality of users based on the received one or more parameters and the stored recipes,
compare the received one or more parameters with at least one given threshold and adapt the customized diet plan depending on the result of said comparison,
receive identification data of a particular cooking appliance (20) of a given user of said plurality of users via said communications network, and
transmit control instructions comprising a recipe, as a part of the customized diet plan, to an information interface integrated in said particular cooking appliance (20) of said given user or integrated in a communications terminal (10) of said given user.

## Patentansprüche

1. Verfahren zur Handhabung der Fernsteuerung eines Kochgeräts zur Bereitstellung einer individuell angepassten Diät, wobei das Verfahren Folgendes umfasst:
Speichern eines oder mehrerer Rezepte, einschließlich mindestens einiger Parameter für die Zubereitung von Lebensmitteln, für ein oder mehrere Kochgeräte (20) durch einen Cloud-Rechner-Server (30), wobei das eine oder die mehreren Kochgeräte (20) eine Kommunikationseinheit umfassen, die eine Verbindung über ein Kommunikationsnetzwerk bereitstellt;
Empfangen eines oder mehrerer Parameter einer Vielzahl von Benutzern, die durch mindestens eine Messvorrichtung (40) erfasst werden, durch den Cloud-Rechner-Server (30) über das Kommunikationsnetzwerk, wobei der eine oder die mehreren Parameter mindestens einen von einem Glukosespiegel, einem Blutdruckwert, einem Gewicht, einem Körpermassenindex, einer Temperatur und/oder einem Herzschlag einschließen;
Erzeugen eines individuell angepassten Diätplans für jeden der Vielzahl von Benutzern durch den Cloud-Rechner-Server (30), basierend auf dem einen oder mehreren empfangenen Parametern und den gespeicherten Rezepten;
Vergleichen des einen oder der mehreren empfangenen Parameter mit mindestens einem gegebenen Schwellenwert durch den Cloud-Rechner-Server (30) und Adaptieren des individuell angepassten Diätplans in Abhängigkeit von dem Ergebnis des Vergleichs;
Empfangen von Identifizierungsdaten eines bestimmten Kochgeräts (20) eines gegebenen Benutzers der Vielzahl von Benutzern über das Kommunikationsnetzwerk durch den Cloud-Rechner-Server (30); und
Übertragen von Steuerungsanweisungen, die ein Rezept umfassen, als Teil des individuell angepassten Diätplans durch den Cloud-Rechner-Server (30) an eine Informationsschnittstelle, die in das spezifische Kochgerät (20) des gegebenen Benutzers integriert ist oder in ein Kommunikationsendgerät (10) des gegebenen Benutzers integriert ist.

2. Verfahren nach Anspruch 1, wobei die Identifizierungsdaten eines spezifischen Kochgeräts (20) durch das Kommunikationsendgerät (10) des Benutzers während eines Anmeldevorgangs des Benutzers in dem Kochgerät (20) gesendet werden.

3. Verfahren nach Anspruch 2, wobei der Anmeldevorgang durch eine in dem Kommunikationsendgerät (10) des Benutzers installierte Software-Anwendung ausgeführt wird.

4. Verfahren nach Anspruch 1, wobei die Identifizierungsdaten eines spezifischen Kochgeräts (20) durch die Kommunikationseinheit des Kochgeräts (20) gesendet werden, nachdem der Benutzer einen Anmeldevorgang in dem Kochgerät (20) durchgeführt hat.

5. Verfahren nach Anspruch 1, wobei das Übertragen der Steuerungsanweisungen ferner eine Warnung für den Benutzer einschließt, einen nicht gesunden Zustand des Benutzers anzuzeigen, wenn der eine oder die mehreren Parameter über dem gegebenen Schwellenwert liegen.

6. Verfahren nach Anspruch 1, wobei die mindestens eine Messvorrichtung eine tragbare Vorrichtung einschließlich eines Fitnesssensors umfasst.

7. System zur Handhabung der Fernsteuerung eines Kochgeräts zur Bereitstellung einer individuell angepassten Diät, wobei das System Folgendes umfasst:
eine Vielzahl von Kochgeräten (20), wobei jedes eine Kommunikationseinheit umfasst, die dazu konfiguriert ist, eine Verbindung derselben über ein Kommunikationsnetzwerk bereitzustellen;
eine Vielzahl von Messvorrichtungen (40), die dazu konfiguriert sind, einen oder mehrere Parameter einer Vielzahl von Benutzern zu erfassen, wobei der eine oder die mehreren Parameter mindestens einen von einem Glukosespiegel, einem Blutdruckwert, einem Gewicht, einem Körpermassenindex, einer Temperatur und/oder einem Herzschlag einschließen; und
einen Cloud-Rechner-Server (30);
wobei der Cloud-Rechner-Server (30) für Folgendes konfiguriert ist:
Speichern eines oder mehrerer Rezepte, einschließlich mindestens einiger Parameter für die Zubereitung von Lebensmitteln für die Vielzahl von Kochgeräten (20),
Empfangen der einen oder mehreren erfassten Parameter der Vielzahl von Benutzern über das Kommunikationsnetzwerk,
Erzeugen eines individuell angepassten Diätplans für jeden der Vielzahl von Benutzern basierend auf dem einen oder mehreren empfangenen Parametern und den gespeicherten Rezepten,
Vergleichen des einen oder der mehreren empfangenen Parameter mit mindestens einem gegebenen Schwellenwert und Adaptieren des individuell angepassten Diätplans in Abhängigkeit von dem Ergebnis des Vergleichs,
Empfangen von Identifizierungsdaten eines bestimmten Kochgeräts (20) eines gegebenen Benutzers der Vielzahl von Benutzern über das Kommunikationsnetzwerk und
Übertragen von Steuerungsanweisungen, die ein Rezept umfassen, als Teil des individuell angepassten Diätplans an eine Informationsschnittstelle, die in das spezifische Kochgerät (20) des gegebenen Benutzers integriert ist oder in ein Kommunikationsendgerät (10) des gegebenen Benutzers integriert ist.

## Revendications

1. Procédé pour gérer la commande à distance d'un appareil de cuisson pour fournir un régime personnalisé, le procédé comprenant :
stocker, par un serveur informatique en nuage (30), une ou plusieurs recettes comprenant au moins certains paramètres de préparation des aliments pour un ou plusieurs appareils de cuisson (20), dans lequel ledit un ou plusieurs appareils de cuisson (20) comprennent une unité de communication assurant l'interconnexion via un réseau de communication ;
recevoir, par le serveur informatique en nuage (30), via ledit réseau de communication, un ou plusieurs paramètres d'une pluralité d'utilisateurs acquis par au moins un dispositif de mesure (40), ledit un ou plusieurs paramètres comprenant au moins l'un d'un niveau de glucose, un niveau de pression artérielle, un poids, un indice de masse corporelle, une température et/ou un rythme cardiaque ;
créer, par le serveur informatique en nuage (30), un plan de régime personnalisé pour chacun de ladite pluralité d'utilisateurs, sur la base de l'un ou plusieurs paramètres reçus et des recettes stockées ;
comparer, par le serveur informatique en nuage (30), l'un ou plusieurs paramètres reçus avec au moins un seuil donné et adapter le plan de régime personnalisé en fonction du résultat de ladite comparaison ;
recevoir, par le serveur informatique en nuage (30), des données d'identification d'un appareil de cuisson particulier (20) d'un utilisateur donné de ladite pluralité d'utilisateurs via ledit réseau de communication ; et
transmettre, par le serveur informatique en nuage (30), des instructions de commande comprenant une recette, dans le cadre du plan de régime personnalisé, à une interface d'information intégrée dans ledit appareil de cuisson particulier (20) dudit utilisateur donné ou intégrée dans un terminal de communication (10) dudit utilisateur donné.

2. Procédé selon la revendication 1, dans lequel lesdites données d'identification d'un appareil de cuisson particulier (20) sont envoyées par ledit terminal de communication d'utilisateur (10) lors d'une opération d'ouverture de session de l'utilisateur dans l'appareil de cuisson (20).

3. Procédé selon la revendication 2, dans lequel ladite opération d'ouverture de session est exécutée par une application logicielle installée dans le terminal de communication d'utilisateur (10).

4. Procédé selon la revendication 1, dans lequel lesdites données d'identification d'un appareil de cuisson particulier (20) sont envoyées par ladite unité de communication de l'appareil de cuisson (20) lorsque l'utilisateur effectue une opération d'ouverture de session dans l'appareil de cuisson (20).

5. Procédé selon la revendication 1, dans lequel ladite transmission des instructions de commande comprend en outre un avertissement destiné à l'utilisateur pour indiquer un état de mauvaise santé de l'utilisateur lorsque l'un ou plusieurs paramètres sont supérieurs au seuil donné.

6. Procédé selon la revendication 1, dans lequel ledit au moins un dispositif de mesure comprend un dispositif portable incluant un capteur de forme physique.

7. Système pour gérer la commande à distance d'un appareil de cuisson pour fournir un régime personnalisé, le système comprenant :
une pluralité d'appareils de cuisson (20), chacun comprenant une unité de communication configurée pour assurer leur interconnexion via un réseau de communication ;
une pluralité de dispositifs de mesure (40) configurés pour acquérir un ou plusieurs paramètres d'une pluralité d'utilisateurs, ledit un ou plusieurs paramètres comprenant au moins l'un d'un niveau de glucose, un niveau de pression artérielle, un poids, un indice de masse corporelle, une température et/ou un rythme cardiaque ; et
un serveur informatique en nuage (30) ;
dans lequel le serveur informatique en nuage (30) est configuré pour :
stocker une ou plusieurs recettes comprenant au moins certains paramètres de préparation des aliments pour ladite pluralité d'appareils de cuisson (20),
recevoir, via le réseau de communication, l'un ou plusieurs paramètres acquis de la pluralité d'utilisateurs,
créer un plan de régime personnalisé pour chacun de ladite pluralité d'utilisateurs sur la base de l'un ou plusieurs paramètres reçus et des recettes stockées,
comparer l'un ou plusieurs paramètres reçus avec au moins un seuil donné et adapter le plan de régime personnalisé en fonction du résultat de ladite comparaison,
recevoir des données d'identification d'un appareil de cuisson particulier (20) d'un utilisateur donné de ladite pluralité d'utilisateurs via ledit réseau de communication, et
transmettre des instructions de commande comprenant une recette, dans le cadre du plan de régime personnalisé, à une interface d'information intégrée dans ledit appareil de cuisson particulier (20) dudit utilisateur donné ou intégrée dans un terminal de communication (10) dudit utilisateur donné.
